# EUROPÄISCHE PATENTSCHRIFT

(11) **EP 1 325 399 B1**
(45) Veröffentlichungstag und Bekanntmachung des Hinweises auf die Patenterteilung: **10.11.2004**
(21) Anmeldenummer: 01969778.8
(22) Anmeldetag: 26.09.2001
(51) Int. Cl.: G06F 1/00

(54) **VERFAHREN UND VORRICHTUNG ZUR ZUGANGSCODEERMITTLUNG**
METHOD AND DEVICE FOR DETERMINING AN ACCESS CODE
PROCEDE ET DISPOSITIF DE DETERMINATION D'UN CODE D'ACCES

(30) Priorität: 29.09.2000 DE 10048334; 13.10.2000 DE 10050734
(43) Veröffentlichungstag der Anmeldung: 09.07.2003
(73) Patentinhaber: Rohrbach, Reinhold, 27578 Bremerhaven (DE)
(72) Erfinder: Rohrbach, Reinhold, 27578 Bremerhaven (DE)
(74) Vertreter: Beetz & Partner Patentanwälte
(86) Internationale Anmeldenummer: PCT/EP2001/011130
(87) Internationale Veröffentlichungsnummer: WO 2002/027442

(56) Entgegenhaltungen:
- WO-A-96/18139
- US-A- 5 465 084
- "DRAWING PASSWORDS" IBM TECHNICAL DISCLOSURE BULLETIN, IBM CORP. NEW YORK, US, Bd. 40, Nr. 5, 1. Mai 1997 (1997-05-01), Seiten 201-203, XP000723606 ISSN: 0018-8689

## Beschreibung

Die Erfindung betrifft ein Verfahren und eine Vorrichtung zur Ermittlung eines Zugangscodes mit einer vorbestimmten Anzahl von Eingabezeichen, die insbesondere Geheimzahlen, -wörter und -zeichen enthalten.

In vielen Sicherheitssystemen sind in der Vergangenheit sehr große Lücken bezügliche der Sicherheit eines Zugangscodes aufgetreten. Beispielsweise lassen sich viele Codes durch Viren, oder ähnliches entschlüsseln. Ebenso haben Computerexperten Programme zur Entschlüsselung von Codes entwickelt. Einheitliche Eingabemethoden des Codes, wie z. B. in Anmeldefenstern, auf Kreditkarten etc. erleichtern allen Hackern das entwickeln von Viren und Programmen, um diverse Codes zu entschlüsseln.

Die US-A-5 465 084 betrifft ein Sicherheitsverfahren für Computer, bei dem ein Zugangscode durch Anordnung von alphanumerischen Zeichen in einem Gitter gebildet werden kann. Das entsprechende Pass-Wort entsteht durch das zweidimensionale Muster von Elementen, die ein Benutzer zur Autorisierung in das Sicherheitssystem eingibt. Im Falle einer Übereinstimmung dieses Musters mit einem vorab abgespeicherten Prototypen für das Muster wird dem Benutzer der Zugang gestattet. Die Reihenfolge der Eingabe der Elemente bei der Bildung des Zugangscodes wird hierbei nicht berücksichtigt.

Die Druckschrift "DRAWING PASSWORDS" IBM TECHNICAL DISCLOSURE BULLETIN, IBM CORP. NEW YORK, US, Bd. 40, Nr. 5, 1. Mai 1997 (1997-05-01), Seiten 201-203, XP000723606 ISSN: 0018-8689 zeigt eine Ermittlung eines Zugangscodes aus handgezeichneten Formen.

Die WO 96 18139 A zeigt ein Verfahren zum Eingeben eines Passwortes bei dem es ausschließlich auf die Reihenfolge der eingegebenen bzw. ausgewählten Symbole ankommt. Ein Benutzer wählt dazu mehrfach aus einer Reihe von angebotenen Symbolen jeweils eines aus. Die Position dieser Symbole auf einer Anzeigeeinheit wird dabei nicht berücksichtigt.

Die Erfindung hat die Aufgabe ein benutzerfreundliches Verfahren zur Ermittlung eines Zugangscodes zu schaffen.

Die Aufgabe wird durch die Merkmale der unabhängigen Patentansprüche gelöst. Die abhängigen Patentansprüche zeigen vorteilhafte Ausführungsformen und Weiterentwicklungen der Erfindung auf.

Das Verfahren zur Ermittlung eines Zugangscodes mit einer vorbestimmten Anzahl von Eingabezeichen ermittelt den Zugangscode aus Eingabezeichen, deren Position bei der Eingabe und der Reihenfolge der Eingabe der Eingabezeichen. Die Anzahl von möglichen Eingabepositionen für die Eingabezeichen ist dabei größer als die vorbestimmte Anzahl von Eingabezeichen. Sowohl die eingegebenen Zeichen als auch deren Position in einem Eingabefeld werden erfasst und für die Ermittlung des Zugangscodes berücksichtigt.

Dies kann vorteilhafterweise in der Darstellung des Login-Screens eines Computersystems geschehen. Anstatt der Eingabe des Passworts erfolgt bei der Anmeldung eines Benutzers die Darstellung des Eingabefeldes für die Eingabezeichen. Der Benutzer gibt die Eingabezeichen, beispielsweise Zahlen oder Buchstaben, in die von ihm bestimmten Eingabepositionen ein. Dabei kann er ein leicht zu merkendes Schema, beispielsweise von oben nach unten, diagonal oder kreuzweise, verwenden. Das Verfahren ist besonders benutzerfreundlich, da der Benutzer sich nur wenige Eingabezeichen merken muss. Durch die Vielfältigkeit der geometrischen Anordnung der Eingabezeichen wird die Sicherheit erhöht, ohne den Anwender durch eine große Anzahl von zu merkenden Eingabezeichen zu belasten. Das Merken von geometrischen Anordnungen ist dagegen wesentlich einfacher.

Die möglichen Eingabepositionen für die Eingabezeichen können matrixförmig angeordnet sein. Andere Anordnungen der Eingabezeichen in dem Eingabefeld sind auch möglich.

Die Eingabezeichen können Zahlen, Buchstaben, Textsymbole, graphische Symbole, Bilder und andere darstellbare Zeichen sein. Diese können über die Tastatur eines Eingabegeräts erfaßt werden oder vom Benutzer beispielsweise mittels einer Zeigeeinrichtung oder Touch-Screens ausgewählt werden. Diese Symbole können beispielsweise Darstellungen von Schachfiguren oder andere vom Benutzer ausgewählte Symbolsätze sein. So kann beispielsweise eine Zugangskontrolle speziell für Kinder die Darstellung von Comicfiguren verwenden. Die Kinder plazieren die ausgewählten Comicfiguren in dem Eingabefeld, um so ihren Zugangscode festzulegen. Dies ist einfacher zu merken als mehrstellige Zahlenkombinationen. Durch Wiederholung der Plazierung der ausgewählten Comicfiguren können sich die Kinder Zugang zu beispielsweise einem Telefon, Computer oder einem Zimmer bzw. Gebäude verschaffen.

Das Verfahren ist durch die vielfältigen Variationsmöglichkeiten sicher genug, so daß auf eine getrennte Erfassung des Benutzers, beispielsweise durch Eingabe des Benutzernamens, verzichtet werden kann. Die Anmeldung des Benutzers kann gleichzeitig mit der Ermittlung des Zugangscodes in einem Schritt erfolgen.

Zusätzlich kann die Farbe der Eingabezeichen zur Ermittlung des Zugangscodes verwendet werden. Dies führt zu einer weiteren Erhöhung der Variationsmöglichkeiten und somit zu einer Erhöhung der Sicherheit. Der Benutzer kann beispielsweise die Farben bei der Eingabe der Eingabezeichen aus einer vorgegebenen Auswahl markieren und den Eingabezeichen zuordnen.

Zur einer Erhöhung der Zugangssicherheit kann zusätzlich die Reihenfolge der Eingabe der Eingabezeichen zur Ermittlung des Zugangscodes verwendet werden. Es entstehen so weitere Variationsmöglichkeiten der möglichen Zugangscodes und dies erhöht die Sicherheit des Verfahrens.

Verschiedene Eingabepositionen können zu Zellen zusammengefaßt und mit einer Umrandung versehen werden. Dies erhöht die Übersichtlichkeit und vereinfacht die Benutzung da die Eingabepositionen leichter zu merken sind. Die Umrandungen der Zellen kann beispielsweise in Form einfacher geometrischer Figuren, insbesondere Rechtecke, Dreiecke oder Kreise, erfolgen. Die Umrandungen der Zellen und/oder die Darstellung der in die Zellen eingegebenen Eingabedaten kann farbig erfolgen.

Der Benutzer kann bei der Eingabe zusätzlich zu den Eingabedaten die Form und/oder Farbe der Umrandungen der Zellen verändern. Dies kann beispielsweise durch Auswahl aus einer vorgegebenen Liste von möglichen Farben und/oder Formen erfolgen. Die Form und/oder Farbe der Umrandungen der Zellen können auch zusätzlich zur Ermittlung des Zugangscodes verwendet werden. Die Eigenschaften der Zellen (Farbe, Form und Farbe der Umrandung) stellen somit ein weiters Symbol zur Ermittlung des Zugangscodes dar. Es entstehen so weitere Variationsmöglichkeiten der möglichen Zugangscodes und dies erhöht die Sicherheit des Verfahrens.

Das Verfahren und die Vorrichtung haben den Vorteil eine benutzerfreundliche und sichere Zugangskontrolle zu schaffen. Die geometrische Anordnung der Eingabezeichen und die farbige Gestaltung sowie die Form und Farbe der Zellumrandungen sind vom Menschen einfacher zu merken als lange Zahlen- und Buchstabenreihen. Durch die dadurch entstehende zusätzliche Variationsmöglichkeit kann die Anzahl der einzugebenden Eingabezeichen, bei gleichbleibender Sicherheit der Zugangskontrolle, verringert werden oder bei gleicher Anzahl von einzugebenden Eingabezeichen wird die Sicherheit der Zugangskontrolle deutlich erhöht.

Das erfindungsgemäße Schema (beispielsweise die Darstellung von mehreren geometrischen oder asymmetrischen Symbolen, auch ineinander verschachtelt) unterscheidet sich von bisherigen Codeeingabemethoden und es besteht die Möglichkeit, nur durch Angabe von einstelligen Zahlen oder eines Zeichens oder einer Grafik sehr hohe Variationsmöglichkeiten zu erreichen. Dieses kann bei Anwendung einer größeren Anzahl von Zahlen/Zeichen/Grafiken so ein großes Ausmaß an Variationsmöglichkeiten zur Entschlüsselung ergeben, dass dieser Code sich nicht mehr so leicht wie bisher entschlüsseln lässt.

Das erfindungsgemäße Verfahren kann durch die Vielfältigkeit der Variationsmöglichkeiten für viele Zugangskontrollen, wie z. B. Kreditkarten, Handies, Maschienen, Betriebssysteme, Software, Hardware verwendet werden. Das Verfahren kann in Form eines speziellen Gerätes oder durch Integration in bestehende Computeranwendungen verwendet werden.

Das erfindungsgemäße Verfahren kann beispielsweise in den heute oft verwendeten Anlagen zur Zugangskontrolle für Räume oder Gebäude verwendet werden. Dazu wird an der Außenseite einer Türschließanlage ein Touch-Screen-Display angebracht. Der Benutzer gibt nun durch Auswahl von Position und Eingabezeichen auf dem Touch-Screen-Display die benötigten Daten für das erfindungsgemäße Verfahren zur Ermittlung des Zugangscodes ein. Aufgrund der vielfältigen Variationsmöglichkeiten durch die Berücksichtigung der Positionen der Eingabezeichen genügt die Eingabe von nur wenigen, leicht zu merkenden Eingabezeichen für eine effektive und sichere Zugangskontrolle.

Die folgende Beschreibung von Ausführungsbeispielen erfolgt anhand der beigefügten schematischen Figuren. Es zeigen:
- Fig. 1: verschiedene Beispiele zur Anordnung von Eingabepositionen des erfindungsgemäßen Verfahrens;
- Fig. 2: ein weiteres Beispiel zur Anordnung von Eingabepositionen des erfindungsgemäßen Verfahrens;
- Fig. 3: ein schematisches Blockdiagramm für ein herkömmliches Verfahren zur Ermittlung eines Zugangscodes; und
- Fig. 4: ein schematisches Blockdiagramm für eine Ausführungsform des erfindungsgemäßen Verfahren zur Ermittlung eines Zugangscodes.

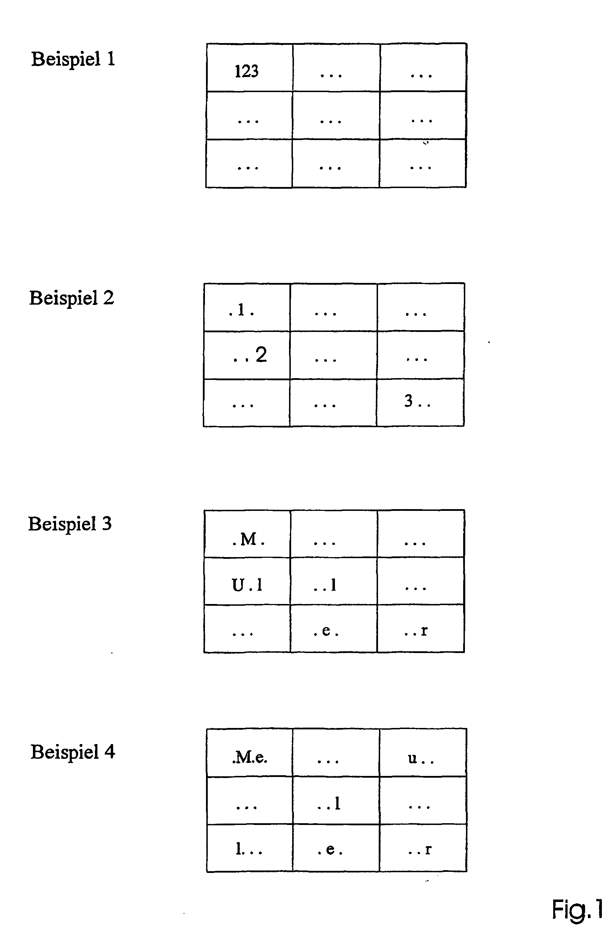

Die beigefügte Figur 1 zeigt verschiedene Beispiele zur Anordnung von möglichen Eingabepositionen des erfindungsgemäßen Verfahrens. In diesem Ausführungsbeispiel werden jeweils 3 mögliche Eingabepositionen zu einer Zelle zusammengefaßt und die Zellen in einer 3x3 Matrix angeordnet. Die Umrandungen der Zellen können bei der Eingabe der Eingabezeichen vom Benutzer in Form und/oder Farbe verändert werden und stellen somit ein weiters Symbol dar, das zur Ermittlung des Zugangscodes verwendet werden kann. Dies erhöht die Vielfältigkeit der möglichen Codes und erlaubt eine einfache Bedienung durch den Benutzer.

Es ist möglich, daß man in einem dargestellten Symbol für die Zellumrandung (z. B. ein Quadrat) die Möglichkeit hat, beispielsweise durch 3 Eingabepositionen im Symbol bis zu 3 Eingabezeichen, beispielsweise verschiedene Zahlen/Zeichen/Grafiken, einzutragen (Beispiel 1). Da aber mehrere Symbole dargestellt werden sollen, erreicht man für jedes dargestellte Symbol die Möglichkeit, entweder in einer einzigen Zelle einen Zugangscode von 3 Eingabezeichen einzugeben oder die 3 Zahlen/Zeichen/Grafiken über die gesamten dargestellten Zellen/Symbole aufzuteilen (Beispiel 2). Zusätzlich können alle angeordneten Zellen oder Eingabezeichen noch farblich markiert werden, was bedeutet, dass die Auswahlmöglichkeit zur Eingabe eines Codes zusätzlich erhöht wird.

Bei Eingabe eines Kennwortes, beispielsweise durch seinen Namen, aufgeteilt im vorhandenen Schema, dürfte es fast unmöglich sein, selbst bei Übereinstimmung des eingegebenen Namens genau die Symbole, die Positionen sowie die Farbe des gleichlautenden Namens zu treffen (Fig. 1, Beispiel 3+4).

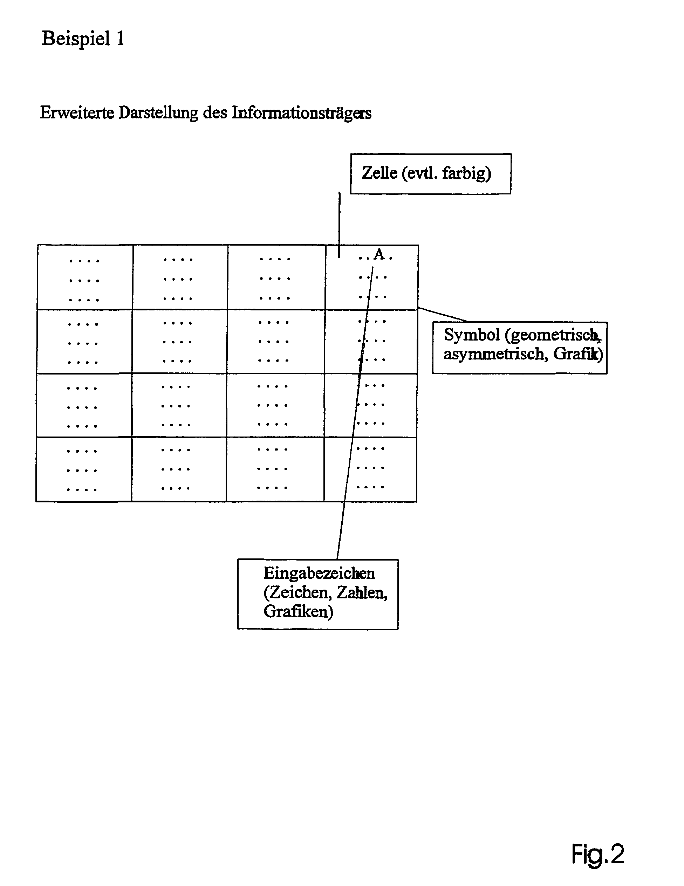

Ein weiters Beispiel zur Anordnung von Eingabepositionen des erfindungsgemäßen Verfahrens zeigt Fig. 2.

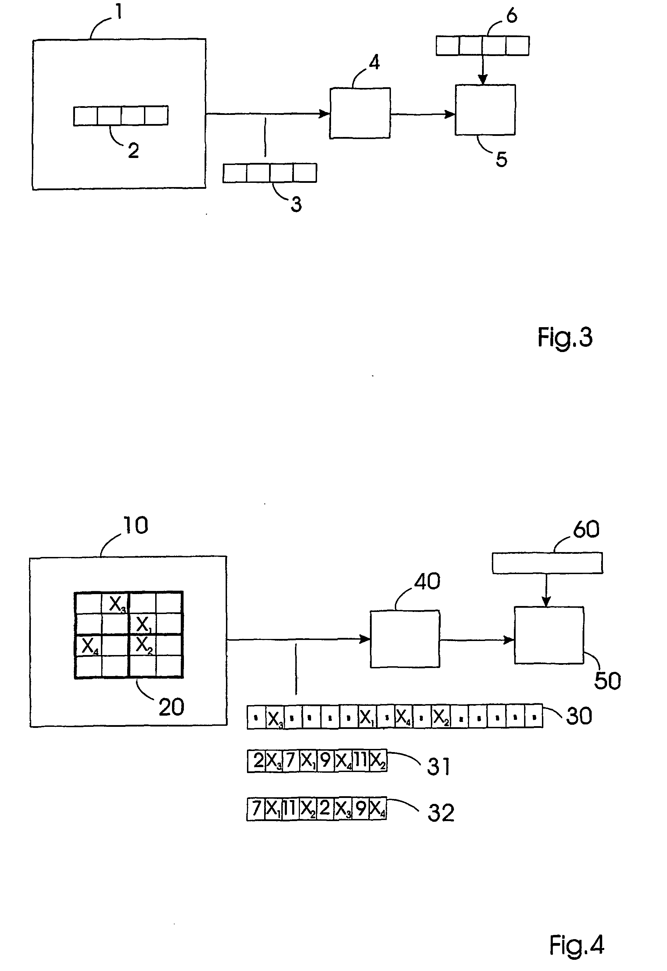

Fig. 3 zeigt ein schematisches Blockdiagramm für ein Verfahren zur Ermittlung eines Zugangscodes. Die Erfassungseinrichtung 1 stellt die Eingabepositionen für den in diesem Beispiel 4-stelligen Zugangscode in einem Eingabefeld 2 dar. Herkömmlicherweise werden die Eingabepositionen für die Eingabezeichen, beispielsweise zur Erfassung eines PIN-Codes für einen Bankautomaten, linear nebeneinander angeordnet. Der beispielsweise über eine Tastatur eingegebene 4-stellige Zugangscode 3 wird meist zur Erhöhung der Sicherheit einem Verschlüsselungsverfahren 4 zugeführt. Der verschlüsselte Zugangscode wird anschließend in einem Vergleicher 5 mit einem Referenzzugangscode 6 auf Identität geprüft.

Der Referenzzugangscode 6 wird zuvor einmalig ermittelt und dabei dem gleichen Verschlüsselungsverfahren unterzogen. Er kann beispielsweise entweder auf einer dem Benutzer überlassenen Magnetkarte oder innerhalb des Zugangskontrollsystems gespeichert werden. Stellt der Vergleicher 5 eine Identität zwischen dem eingegebenen und verschlüsselten Zugangscode 3 mit dem Referenzzugangscode 6 fest, so wird der Zugang zu der zu schützenden Einrichtung freigegeben.

Fig. 4 zeigt ein schematisches Blockdiagramm für eine Ausführungsform des erfindungsgemäßen Verfahrens. Die Erfassungseinrichtung 10 stellt die möglichen Eingabepositionen für die Eingabezeichen in einem Eingabefeld 20 dar. In diesem Beispiel sind die möglichen Eingabepositionen matrixförmig mit 4 Zeilen und 4 Spalten angeordnet. Jeweils 4 nebeneinanderliegende Eingabepositionen können zu Zellen zusammengefasst werden. Die Anordnung der Eingabepositionen in Zellen kann die Übersichtlichkeit erhöhen und die Benutzerfreundlichkeit des erfindungsgemäßen Verfahrens weiter verbessern. In diesem Beispiel wird ebenfalls ein Zugangscode mit 4 Eingabezeichen ermittelt. Die vom Benutzer zur Eingabe ausgewählten Eingabepositionen sind mit einem Kreuz gekennzeichnet. Die Eingabeeinrichtung 10 erfasst die eingegebenen Eingabezeichen und deren Positionen in dem Eingabefeld 20. Eventuell kann auch die Reihenfolge der Eingaben erfasst werden. Die erfassten Daten werden nun zur Ermittlung eines Zugangscodes verwendet.

Ein mögliches Beispiel für einen aus diesen Eingabedaten ermittelten Zugangscode ist in Feld 30 dargestellt. Die Eingabepositionen des Eingabefeldes 20 werden hier liniearisiert und nicht gefüllte Felder werden mit einem speziellen Zeichen aufgefüllt. In diesem Beispiel entsteht aus der Eingabe von 4 Eingabezeichen ein 16-stelliger Zugangscode. Dieser kann mittels eines Verschlüsselungsverfahrens 40 verschlüsselt und in einem Vergleicher 50 mit einem Referenzzugangscode 60 verglichen werden.
Stimmt der eingegebene Zugangscode 30 mit dem Referenzzugangscode 60 überein, wird der Zugang zu dem System gewährt.

Bei einer gleichen Anzahl von Eingabezeichen kann durch das erfindungsgemäße Verfahren ein sehr sicherer Zugangscode ermittelt werden. In dem Beispiel zur Eingabe eines 4-stelligen numerischen PIN-Codes erhöht sich die Anzahl von möglichen Zugangscodes von 1000 für das herkömmliche Verfahren (z.B. Fig. 3) auf [16! / (16-4)!] • 1000 = 43.680.000. Dabei muss der Benutzer sich zusätzlich nur die Anordnung der Eingabezeichen in dem Eingabefeld merken.

Für eine weitere Möglichkeit zur Ermittlung des Zugangscodes werden die Eingabepositionen der eingegebenen Zeichen, beispielsweise die Positionsnummern der ausgewählten Felder, zusammen mit dem eingegebenen Zeichen direkt zur Ermittlung des Zugangscodes verwendet. Die möglichen Eingabefelder können dabei, wie in diesem Beispiel, einfach durchnumeriert werden oder es können andere Verfahren angewandt werden, die beispielsweise die XY-Koordinaten des Eingabefeldes und/oder die Koordinaten innerhalb einer Zelle verwenden.

Das Feld 31 zeigt für obiges Beispiel einen nach diesem Verfahren ermittelten Zugangscode. Die Eingaben erfolgten an Positionen 7, 11, 2 und 9. Den 4 Eingabezeichen x₁ bis x₄ werden die jeweiligen Positionsnummern vorangestellt und diese Pärchen werden in Reihenfolge der Positionsnummern in den Zugangscode eingetragen. Der entstehende 8-stellige Zugangscode besitzt die gleichen Variationsmöglichkeiten wie das vorangegangene Beispiel und erlaubt ein speicherplatzsparendes Abspeichern der Referenzzugangscodes.

Feld 32 zeigt eine weitere Möglichkeit zur Ermittlung eines Zugangscodes für obiges Beispiel, bei dem die Reihenfolge der Eingaben berücksichtigt wird. In dem Beispiel wurde zuerst x₁ an Position 7, anschließend x₂ an Position 11, usw. eingegeben. Die eingegebenen Zeichen werden zusammen mit ihren Positionen in der Reihenfolge ihrer Eingabe in den Zugangscode eingetragen. Aufdiese Weise kann die Anzahl der Variationsmöglichkeiten zusätzlich erhöht werden, und so die Sicherheit des Zugangscodes weiter gesteigert werden.

Die oben erläuterten Ausführungsbeispiele können in jeder beliebigen Weise kombiniert oder in Alleinstellung reduziert werden.

## Patentansprüche

1. Verfahren zur Ermittlung eines Zugangscodes mit einer vorbestimmten Anzahl von Eingabezeichen, wobei
die Eingabezeichen an mehreren möglichen Eingabepositionen in einem zumindest 2-dimensionalen Eingabefeld (2) eingegeben werden können und
die Anzahl der möglichen Eingabepositionen größer als die vorbestimmte Anzahl der Eingabezeichen ist,
**dadurch gekennzeichnet, dass**
jeweils mehrere mögliche Eingabepositionen in Zellen angeordnet sind und
der Zugangscode aus den Eingabezeichen, deren Position bei der Eingabe und der Reihenfolge der Eingabe der Eingabezeichen ermittelt wird.

2. Verfahren nach Anspruch 1, wobei mögliche Eingabepositionen für die Eingabezeichen matrixförmig angeordnet sind.

3. Verfahren nach zumindest einem der vorangehenden Ansprüche, wobei als Eingabezeichen Zahlen, Buchstaben, Textsymbole, graphische Symbole und/oder Bilder verwendet werden.

4. Verfahren nach zumindest einem der vorangehenden Ansprüche, wobei zusätzlich die Farbe der Eingabezeichen zur Ermittlung des Zugangscodes verwendet wird.

5. Verfahren nach zumindest einem der vorangehenden Ansprüche, wobei verschiedene Eingabepositionen zu Zellen zusammengefasst werden, die mit einer Umrandung versehen werden können.

6. Verfahren nach Anspruch 5, wobei die Umrandungen der Zellen in Form einfacher geometrischer Figuren, insbesondere Rechtecke, Dreiecke oder Kreise, erfolgt.

7. Verfahren nach Anspruch 5 oder 6, wobei die Umrandungen der Zellen oder die Darstellung der in die Zellen eingegebenen Eingabedaten farbig erfolgt.

8. Verfahren nach zumindest einem der Ansprüche 5 bis 7, wobei bei der Eingabe die Form und/oder Farbe der Umrandungen der Zellen verändert werden kann.

9. Verfahren nach Anspruch 8, wobei zusätzlich die Form und/oder Farbe der Umrandungen der Zellen zur Ermittlung des Zugangscodes verwendet wird.

10. Verfahren nach zumindest einem der vorangehenden Ansprüche, wobei das Eingabefeld 2-dimensional oder 3-dimensional ist.

11. Verfahren nach zumindest einem der vorangehenden Ansprüche, wobei das Verfahren zur Zugangskontrolle für Computersysteme verwendet wird.

12. Vorrichtung zur Ermittlung eines Zugangscodes mit einer vorbestimmten Anzahl von Eingabezeichen, wobei
die Eingabezeichen an mehreren möglichen Eingabepositionen in einem zumindest 2-dimensionalen Eingabefeld (2) eingegeben werden können und
die Anzahl der möglichen Eingabepositionen größer als die vorbestimmte Anzahl der Eingabezeichen ist,
**dadurch gekennzeichnet, dass**
jeweils mehrere mögliche Eingabepositionen in Zellen angeordnet sind und
der Zugangscode aus den Eingabezeichen, deren Position bei der Eingabe und der Reihenfolge der Eingabe der Eingabezeichen ermittelt wird.

13. Verwendung der Vorrichtung nach Anspruch 12 zur Zugangskontrolle für Computersysteme.

## Claims

1. Method for determining an access code with a predetermined number of input symbols, wherein
the input symbols may be input at a plurality of possible input positions in an at least two-dimensional input field (2), and
the number of possible input positions is larger than the predetermined number of input symbols,
**characterized in that**
a plurality of possible input positions are respectively arranged in cells, and
the access code is determined from the input symbols, their positions when inputted and the input sequence of the input symbols.

2. Method according to claim 1, wherein possible input positions for the input symbols are arranged in the form of a matrix.

3. Method according to at least one of the preceding claims, wherein numbers, characters, text symbols, graphical symbols and/or figures are used as input symbols.

4. Method according to at least one of the preceding claims, wherein the colour of the input symbols is additionally used for determining the access code.

5. Method according to at least one of the preceding claims, wherein several input positions are combined to cells, which may be provided with a frame.

6. Method according to claim 5, wherein the framing of the cells is made in form of simple geometrical figures, particularly rectangles, triangles or circles.

7. Method according to claim 5 or 6, wherein the cell frames or the presentation of the input data input into the cells is coloured.

8. Method according to at least one of claims 5 to 7, wherein the form and/or the colour of the cell frames is changeable during input.

9. Method according to claim 8, wherein the form and/or the colour of the cell frames is additionally used for determining the access code.

10. Method according to at least one of the preceding claims, wherein the input field is two-dimensional or three-dimensional.

11. Method according to at least one of the preceding claims, wherein the method is used for access control for computer systems.

12. Apparatus for determining an access code with a predetermined number of input symbols, wherein
the input symbols may be input at a plurality of possible input positions in an at least two-dimensional input field (2), and
the number of possible input positions is larger than the predetermined number of input symbols,
**characterized in that**
a plurality of possible input positions are respectively arranged in cells, and
the access code is determined from the input symbols, their positions when inputted and the input sequence of the input symbols.

13. Usage of the apparatus according to claim 12 for access control for computer systems.

## Revendications

1. Procédé de détermination d'un code d'accès avec un nombre déterminé au préalable de caractères d'entrée, les caractères d'entrée pouvant être saisis selon plusieurs positions d'entrée possibles dans un champ d'entrée (2) au moins bidimensionnel et le nombre des positions d'entrée possibles étant supérieur au nombre déterminé au préalable des caractères d'entrée,
**caractérisé en ce que**
plusieurs positions d'entrée possibles sont disposées respectivement dans des cellules et
le code d'accès hors des caractères d'entrée dont la position est déterminée lors de la saisie et de l'ordre de saisie des caractères d'entrée.

2. Procédé selon la revendication 1, sachant que les positions d'entrée possibles pour les caractères d'entrée sont disposées en forme de tableau.

3. Procédé selon au moins une des revendications précédentes, sachant que des chiffres, des lettres, des symboles de texte, des symboles graphiques et/ou des images sont utilisés comme caractères d'entrée.

4. Procédé selon au moins une des revendications précédentes, sachant qu'en plus la couleur des caractères d'entrée est utilisée pour déterminer le code d'accès.

5. Procédé selon au moins une des revendications précédentes, dans lequel différentes positions d'entrée sont groupées en cellules qui peuvent être pourvues d'une bordure.

6. Procédé selon la revendication 5, sachant que les bordures des cellules se font sous la forme de simples figures géométriques, en particulier des rectangles, triangles ou cercles.

7. Procédé selon la revendication 5 ou 6, sachant que les bordures des cellules ou la représentation des données d'entrée saisies dans les cellules se font de manière colorée.

8. Procédé selon au moins une des revendications 5 à 7, sachant que la forme et/ou la couleur des bordures des cellules peut être modifiée lors de la saisie.

9. Procédé selon la revendication 8, sachant qu'en plus, la forme et/ou la couleur des bordures des cellules est utilisée pour déterminer le code d'accès.

10. Procédé selon au moins une des revendications précédentes, sachant que le champ d'entrée est bidimensionnel ou tridimensionnel.

11. Procédé selon au moins une des revendications précédentes, le procédé de contrôle d'accès étant utilisé pour des systèmes informatiques.

12. Dispositif de détermination d'un code d'accès avec un nombre déterminé au préalable de caractères d'entrée, les caractères d'entrée pouvant être saisis selon plusieurs positions d'entrée possibles dans un champ d'entrée (2) au moins bidimensionnel et le nombre des positions d'entrée possibles étant supérieur au nombre déterminé au préalable de caractères d'entrée,
**caractérisé en ce que**
plusieurs positions d'entrée possibles sont disposées respectivement dans des cellules et le code d'accès hors des caractères d'entrée dont la position est déterminée lors de la saisie et de l'ordre de saisie des caractères d'entrée.

13. Utilisation du dispositif selon la revendication 12 en vue d'un contrôle d'accès pour les systèmes informatiques.
